# EUROPEAN PATENT SPECIFICATION

(11) **EP 3 611 987 B1**
(45) Date of publication and mention of the grant of the patent: **09.03.2022**
(21) Application number: 19738407.6
(22) Date of filing: 11.01.2019
(51) Int. Cl.: H04W 72/04, H04W 74/00, H04B 7/06, H04B 7/08, H04W 74/04, H04W 16/28, H04W 76/19, H04W 56/00, H04L 5/00

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 11.01.2018 CN 201810027155
(43) Date of publication of application: 19.02.2020
(73) Proprietor: Huawei Technologies Co., Ltd., Longgang District Shenzhen, Guangdong 518129 (CN)
(72) Inventor: YOU, Chunhua, Guangdong 518129 (CN); YAN, Le, Guangdong 518129 (CN); ZHANG, Hongping, Guangdong 518129 (CN)
(74) Representative: Epping - Hermann - Fischer
(86) International application number: PCT/CN2019/071263
(87) International publication number: WO 2019/137450

(56) References cited:
- CN-A- 106 797 656
- CN-A- 107 005 858
- ASUSTEK: "Discussion on beam recovery request in NR", 3GPP DRAFT; R2-1712213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20171127 - 20171201 16 November 2017 (2017-11-16), XP051370920, Retrieved from the Internet: URL:http://www.3gpp.org/ftp/tsg%5Fran/WG2% 5FRL2/TSGR2%5F100/Docs/ [retrieved on 2017-11-16]
- VIVO: "RACH configuration for beam recovery", 3GPP DRAFT; R2-1712754_RACH CONFIGURATION FOR BEAM RECOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20171127 - 20171201 17 November 2017 (2017-11-17), XP051371657, Retrieved from the Internet: URL:http://www.3gpp.org/ftp/tsg%5Fran/WG2% 5FRL2/TSGR2%5F100/Docs/ [retrieved on 2017-11-17]
- QUALCOMM INCORPORATED: "PRACH Procedure Considerations", 3GPP DRAFT; R1-1718532 PRACH PROCEDURE CONSIDERATIONS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20171009 - 20171013 8 October 2017 (2017-10-08), XP051341714, Retrieved from the Internet: URL:http://www.3gpp.org/ftp/Meetings_3GPP_ SYNC/RAN1/Docs/ [retrieved on 2017-10-08]
- RAN1: "LS to RAN2 on Beam Failure Recovery", 3GPP DRAFT; R2-1800003_R1-1721346, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Vancouver, Canada; 20180122 - 20180126 8 January 2018 (2018-01-08), XP051385540, Retrieved from the Internet: URL:http://www.3gpp.org/ftp/tsg%5Fran/WG2% 5FRL2/TSGR2%5FAHs/2018%5F01%5FNR/Docs/ [retrieved on 2018-01-08]
- NOKIA ET AL: "Radio Link Monitoring In NR", 3GPP DRAFT; R1-1718803, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20171009 - 20171013 9 October 2017 (2017-10-09), XP051353292, Retrieved from the Internet: URL:http://www.3gpp.org/ftp/tsg_ran/WG1_RL 1/TSGR1_90b/Docs/ [retrieved on 2017-10-09]
- ASUSTEK: "R2-1712213: Discussion on Beam Recovery Request in NR", 3GPP TSG-RAN WG2 Meeting #100, 1 December 2017 (2017-12-01), XP051370920,
- HUAWEI et al.: "R2-1712563: Handling of Resources for Beam Failure Recovery", 3GPP TSG-RAN WG2#100, 1 December 2017 (2017-12-01), XP051371525,
- ASUSTEK: "Clarification on Random Access Procedure", 3GPP DRAFT; R2-091239 CLARIFICATION ON RA PROCEDURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090203, 3 February 2009 (2009-02-03), XP050323329, [retrieved on 2009-02-03]

## Description

### TECHNICAL FIELD

Embodiments of this application relate to the communications field, and in particular, to a communication method and a communications apparatus.

### BACKGROUND

Random access is a crucial step in a mobile communications system, and also a necessary step for establishing a communication link between a terminal and a base station. The terminal exchanges information with the base station through random access, so as to complete subsequent operations such as calling, resource requesting, and data transmission. Random access performance directly affects user experience.

In a long term evolution (LTE) system, a dedicated preamble (preamble) is configured for random access, and the dedicated preamble is released after the random access succeeds.

ASUSTEK: "R2-1712213: Discussion on Beam Recovery Request in NR",3GPP TSG-RAN WG2 Meeting #100 discusses non contention channel based on PRACH, wherein after MAC receives beam failure indication from PHY layer, UE will perform transmission based on specific PRACH resource configured by gNB.

3GPP DRAFT; R2-1712754 RACH CONFIGURATION FOR BEAM RECOVERY, 3RD GENERATION PARTNERSHIP PROJECT (3GPP) discloses that reconfiguration of dedicated PRACH resources for beam failure recovery will occur when there is an RRC reconfiguration or handover.

ASUSTEK: "R2-091239: CLARIFICATION ON RA PROCEDURE, 3GPP-DRAFT, discloses that explicitly signalled *ra-PreambleIndex* and *ra-PRACH-MaskIndex* should be discarded when MAC reset.

### SUMMARY

The invention is defined by the independent claims. Advantageous embodiments are described in the dependent claims. Other embodiments and/or examples not falling under the claims are not part of the claimed invention but are useful for understanding the invention.

According to a first aspect, a communication method is provided, as defined in claim 1. The communication method may be implemented by a terminal or a component of a terminal.,

In the method, when a beam failure occurs later, the terminal can continue to perform beam failure recovery using the indicated first resource, with no need to be notified by dedicated signaling, for example, RRC reconfiguration message.

According to a second aspect, a communications apparatus is provided, as defined in claim 6, configured to implement the communication method in the first aspect

According to a third aspect, a communications system is provided, as defined in claim 8, including the foregoing
communications apparatus.

According to a fourth aspect, an embodiment of this application provides a computer storage medium, as defined in claim 7.

The computer storage medium stores a program, and when the program is run, a computer is enabled to perform the method in the foregoing aspect.

According to a fifth aspect, a computer program product including an instruction is provided, as defined in claim 9.

When the computer program product is run on a computer, the computer is enabled to perform the method in the foregoing aspect.

### BRIEF DESCRIPTION OF DRAWINGS

FIG. 1 is a schematic diagram of a possible communications system according to an embodiment of this application;
FIG. 2 is a schematic flowchart of a communication method according to an embodiment of this application;
FIG. 3 is a schematic structural diagram of a communications apparatus according to an embodiment of this application;
FIG. 4 is a schematic structural diagram of a terminal according to an embodiment of this application; and
FIG. 5 is a schematic structural diagram of a communications apparatus according to an embodiment of this application.

### DESCRIPTION OF EMBODIMENTS

The technology described in this application may be applied to various wireless communications networks, for example a 5th generation 5G network, a later network, or a combination of a plurality of networks.

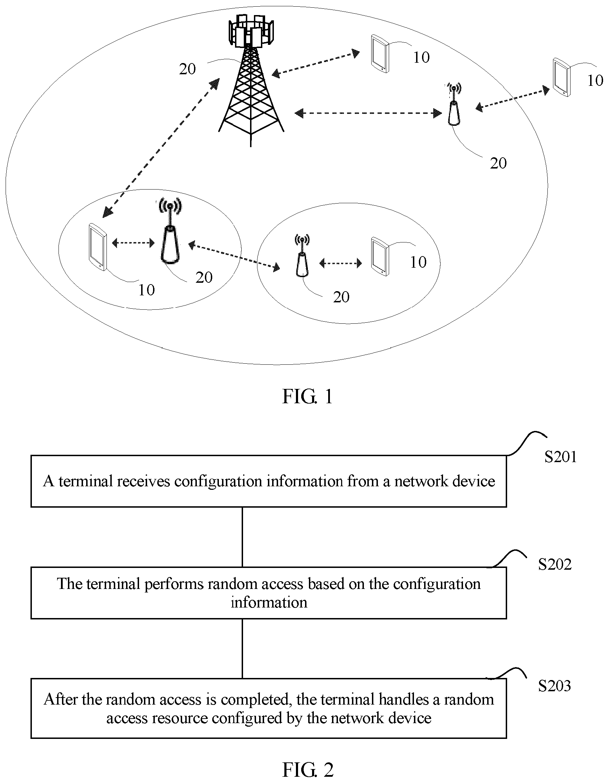

FIG. 1 is a schematic diagram of a possible communications system according to an embodiment of the present invention. The communications system includes one or more network devices (radio access networks) 20 and one or more terminals 10. The radio access network may be connected to a core network (core network, CN). The network device 20 may be any device with a wireless sending/receiving function. The network device 20 includes but is not limited to a base station (for example, a base station BS, a NodeB, an evolved NodeB eNodeB or eNB, a gNodeB or gNB in a 5G communications system, a base station in a future communications system, or an access node, a wireless relay node, or a wireless backhaul node in a Wi-Fi system).

The base station may be a macro base station, a micro base station, a picocell base station, a small cell, a relay station, or the like. A plurality of base stations may support networks of one aforementioned technology, or may support networks of different aforementioned technologies. The base station may include one or more co-site or non-co-site transmission/reception points (Transmission /reception point, TRP). Alternatively, the network device 20 may be a radio controller, a central unit (central unit, CU), or a distributed unit (distributed unit, DU) in a cloud radio access network (cloud radio access network, CRAN) scenario. Alternatively, the network device 20 may be a server, a wearable device, an in-vehicle device, or the like. The following provides a description by using an example in which the network device 20 is a base station. The plurality of network devices 20 may be base stations of one type, or may be base stations of different types. The base station may communicate with the terminal 10, or may communicate with the terminal 10 through a relay station. The terminal 10 may support communication with a plurality of base stations of different technologies. For example, the terminal may support communication with a base station that supports an LTE network, or may support communication with a base station that supports a 5G network, or may support dual connectivity to a base station in an LTE network and a base station in a 5G network.

The terminal 10 is a device with a wireless sending/receiving function. The terminal 10 may be deployed on land, including indoor or outdoor, handheld, wearable, or in-vehicle deployment, may be deployed on water (for example, on a ship), or may be deployed in the air (for example, on a plane, a balloon, or a satellite). The terminal device may be a mobile phone (mobile phone), a tablet computer (Pad), a computer with a wireless sending/receiving function, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in smart grid (smart grid), a wireless terminal in transportation safety (transportation safety), a wireless terminal in smart city (smart city), a wireless terminal in smart home (smart home), or the like. An application scenario is not limited in this embodiment of this application. The terminal may sometimes also be referred to as a terminal device, user equipment (user equipment, UE), an access terminal device, a UE unit, a UE station, a mobile station, a mobile console, a remote station, a remote terminal device, a mobile device, a UE terminal device, a terminal device, a wireless communications device, a UE agent, a UE apparatus, or the like. The terminal may be stationary or mobile.

To facilitate understanding, the following explains some terms in this application.

In this application, terms "network" and "system" may be interchangeably used, and "apparatus" and "device" may also be interchangeably used, but their meanings can be understood by a person skilled in the art. A "communications apparatus" may be the network device (for example, a base station, a DU, or a CU) or the terminal in FIG. 1, or may be a component of the network device, a component (for example, an integrated circuit or a chip) of the terminal, or another communications module.

In the embodiments of this application, beam may be translated into beam in English. Beams may include transmit beams and receive beams. A transmit beam may refer to signal strength distribution formed in different directions in space after a signal is transmitted by an antenna. A receive beam may refer to signal strength distribution, in different directions in space, of a radio signal received from an antenna. It may be understood that one or more antenna ports of one beam may also be considered as one antenna port set. Therefore, one antenna port set includes at least one antenna port.

Optionally, a beam may refer to a precoding vector that has an energy transmission directivity and that can be identified by using identification information. The energy transmission directivity means that a signal precoded by using the precoding vector and received in a specific range of spatial locations has a desired received power, for example, up to a received demodulation signal-to-noise ratio, while a signal precoded by using the precoding vector and received in other spatial locations has a lower power, for example, below the received demodulation signal-to-noise ratio. Different communications devices may have different precoding vectors, in other words, correspond to different beams. With respect to a configuration or a capability of a communications device, the communications device may use one or more of a plurality of different precoding vectors at a same moment, in other words, one or more beams may be formed at the same time. A beam may be understood as a space resource. A beam may be identified by using identification information. Optionally, the identification information may correspond to a corresponding resource identity (identity, ID). For example, the identification information may correspond to a configured channel state information-reference signal (Channel state information Reference Signal, CSI-RS) ID or resource, or may correspond to a configured uplink sounding reference signal (Sounding Reference Signal, SRS) ID or resource. Alternatively, optionally, the identification information may be identification information explicitly or implicitly carried in a signal or channel carried on the beam. For example, the identification information includes but is not limited to: identification information of the beam is indicated by using a synchronization signal or a broadcast channel sent on the beam, and identification information of the beam is indicated by using a synchronization signal block (Synchronization Signal block, SS block) index sent on the beam (for example, an SS block index). The SS block (SSB) includes at least a primary synchronization signal (PSS, Primary synchronization signal) and/or a secondary synchronization signal (SSS, secondary synchronization signal) and/or a broadcast channel (PBCH).

A serving cell is a cell that can be used to provide a radio resource for a terminal in connected mode. If no carrier aggregation CA or dual connectivity DC is configured, the terminal in connected mode has only one serving cell. If carrier aggregation (carrier aggregation, CA) and/or dual connectivity (dual connectivity, DC) are/is configured for the terminal in connected mode, at least one cell is used as a serving cell, including a primary cell and all secondary cells SCell. The primary cell (Primary Cell, PCell) is a cell operating at a primary frequency, where UE may perform an initial connection establishment process or initiate a connection re-establishment process with the cell or the cell is indicated to UE as a primary cell in a handover process. The secondary cell (Secondary Cell, SCell) is a cell operating at a secondary frequency, and provides an additional radio resource for the terminal in connected mode. An active serving cell is a serving cell that can be used for data transmission. A primary secondary cell (Primary Secondary Cell, PSCell) is a cell in which random access can be initiated when a secondary cell of a secondary base station is changed. A PUCCH SCell is an SCell for which a PUCCH has been configured.

For ease of description, for some terms in this application, terms of an LTE system may be used as examples. It may be understood that other terms may be used in other systems.

For 5G or other evolved or similar systems, a random access resource configuration or a random access initiation scenario may be different from that in LTE. A communication method and a communications apparatus that are provided in the embodiments of this application are applicable to the 5G and other evolved or similar systems.

An embodiment of this application provides a communication method. As shown in FIG. 2, the method may include the following steps.

S201. A terminal receives configuration information from a network device.

It can be understood that the terminal receives, from the network device, configuration information indicating one or more random access resources, and the configuration information may at least include information used to indicate a contention-free random access resource. An occasion on which a network side sends the configuration information is not limited in this embodiment of this application.

Random access may include contention-free random access (contention free random access) or contention-based random access (contention based random access). For example, the contention-free random access may include the following process: The terminal sends a random access request (for example, a preamble), and a base station sends an access response (for example, a random access response (random access response, RAR), an uplink grant (uplink grant), or a downlink assignment (downlink assignment)) to the terminal. The RAR includes at least one of an uplink grant, an uplink timing advance indication, and a temporary cell radio network temporary identifier (temporary cell radio network temporary identifier, temporary C-RNTI). For example, the contention-based random access may include the following process: The terminal sends a random access request (for example, a preamble); a base station sends a random access response (for example, an RAR) to the terminal; the terminal sends a message 3 (Msg3) (including a connection establishment request or an identifier C-RNTI of the terminal); and contention resolved (the base station sends a contention resolution (contention resolution) message to the terminal, where the contention resolution message includes a C-RNTI-scrambled uplink grant or downlink assignment, or some or all data of the message 3). For example, in a cell change scenario, a beam failure recovery scenario, or a scenario in which the terminal needs to obtain uplink timing advance (timing advance, TA), the terminal may initiate (trigger) random access. The random access herein may be contention-based random access, or may be contention-free random access.

It may be understood that whether the terminal initiates contention-based random access or contention-free random access may depend on whether the network device has configured a contention-free random access resource meeting a condition or depend on a configuration of the network device. This is not limited in this embodiment of this application.

In a possible manner, the cell change scenario may be change of a serving cell of the terminal resulting from a handover (for example, a primary cell (Primary Cell, PCell) change), a secondary cell group (secondary cell group, SCG) change under dual connectivity (dual connectivity, DC), or the like. In this scenario, the configuration information indicating the one or more random access resources may be carried by using a reconfiguration message, and the reconfiguration message may be, for example, a radio resource control (Radio Resource Control, RRC) message. For ease of description, configuration information indicating a random access resource for cell change may be referred to as first configuration information. In this scenario, the network device sending the first configuration information may be a source base station. The RRC message may be, for example, an RRC reconfiguration message carrying mobility control information (mobilitycontrolinfo) or an RRC message used for reconfiguration with synchronization. This is not limited in this embodiment of this application.

In a possible manner, the beam failure recovery scenario may be as follows: When quality of none of serving beams (or referred to as serving SSBs or serving CSI-RSs) of a serving cell of the terminal meets a condition, it indicates that a beam failure has occurred. To ensure communication between the terminal and the network device, beam failure recovery needs to be performed. To be specific, the terminal re-determines, from candidate beams (or referred to as candidate SSBs or candidate CSI-RSs), a beam (or referred to as an SSB or a CSI-RS) whose quality meets the condition, and then sends a beam failure recovery request to the network device, to notify, by using the request, the network device of the beam selected by the terminal, so that the base station uses the selected beam as a serving beam for subsequent communication between the network device and the terminal. In this scenario, the configuration information indicating the one or more random access resources may be carried in a reconfiguration message, and the reconfiguration message may be, for example, an RRC message. For ease of description, configuration information indicating a random access resource for a beam failure recovery request may be referred to as second configuration information. In this scenario, the network device sending the second configuration information may be a serving base station. The terminal receives, based on a receive parameter of the serving beam, downlink control information (for example, an uplink grant or a downlink assignment) transmitted on a physical downlink control channel (physical downlink control channel, PDCCH).

For example, if the terminal has only one serving cell, when PDCCH quality of all serving beams (or referred to as serving SSBs or serving CSI-RSs) of the serving cell is less than a preset threshold for a preset quantity of consecutive times, it is determined that a beam failure has occurred. If the terminal has at least two serving cells, when PDCCH quality of all serving beams (or referred to as serving SSBs or serving CSI-RSs) of a serving cell is less than a preset threshold for a preset quantity of consecutive times, it is determined that a beam failure has occurred in the serving cell. How to determine occurrence of a beam failure is not limited in this embodiment of this application.

The configuration information may include the first configuration information and/or the second configuration information. In other words, the first configuration information and the second configuration information may be carried in one message for sending. It may be understood that the first configuration information and the second configuration information may be alternatively sent in different messages and/or on different occasions. This is not limited in this embodiment of this application.

In a possible manner, the scenario in which the terminal needs to obtain the uplink TA may include a scenario in which the network device needs to send downlink data, but finds that the terminal is out of synchronization in uplink, a scenario in which a secondary cell needs to be activated, or the like. In this scenario, the configuration information indicating the one or more random access resources may be carried by using, for example, a PDCCH order (order). It may be understood that after receiving the PDCCH order, the terminal initiates random access. In other words, the PDCCH order is downlink control information used to trigger random access. In this scenario, the network device sending the PDCCH order may be a serving base station.

A contention-free random access resource is a resource used by the terminal to perform contention-free random access, and a contention-based random access resource is a resource used by the terminal to perform contention-based random access. The contention-free random access resource may be a terminal-specific resource, and the contention-based random access resource may be a common resource shared by a plurality of terminal devices in a cell. Both the contention-based random access resource and the contention-free random access resource are configured by the network side, and the network device sends related indication information to the terminal.

It may be understood that the information indicating the contention-free random access resource and information indicating the contention-based random access resource may be carried in one message or may be carried in different messages. This is not limited in this embodiment of this application. In a possible manner, the information indicating the contention-based random access resource may be carried in a system information block (SIB).

When the information indicating the contention-free random access resource and the information indicating the contention-based random access resource are carried in one message, in a possible manner, the first configuration information, the second configuration information, or the PDCCH order may also include the information indicating the contention-based random access resource.

The contention-free random access resource and the contention-based random access resource may be collectively referred to as random access resources. A random access resource mentioned in this application may be a contention-free random access resource or a contention-based random access resource. The random access resource may include at least one of a time-frequency domain resource and a code resource. Optionally, the code resource may be a preamble (preamble). Optionally, a contention-free random access resource indicated by the second configuration information may be referred to as a first resource, a contention-free random access resource indicated by the first configuration information may be referred to as a second resource, and a contention-free random access resource indicated by the PDCCH order may be referred to as a third resource. Information about a random access resource specifically configured by the network device is transmitted to the terminal by using the configuration information. For example, the random access resource may be indicated as follows:

```
          CFRA-SSB-Resource::= SEQUENCE {
            ssb SSB-ID
            ra-PreambleIndex Ra-PreambleIndex
            ra-Resources RA-Resources
          }
```

where ssb is identified by using an SSB-ID, ra-PreambleIndex is a preamble index, and ra-Resources is a time-frequency domain resource indication for random access.

Optionally, the preamble in the configuration information may not be indicated by using the index, but is indicated by using a corresponding sequence. In other words, the configuration information may include the index or the sequence of the preamble.

The first configuration information, the second configuration information, and the PDCCH order are collectively referred to as configuration information below. Random access resources indicated in the first configuration information and the second configuration information have different uses. A use of a random access resource may be explicitly or implicitly indicated in configuration information, so that the terminal can learn of the use of the configured random access resource. For example, if the first configuration information and the second configuration information are carried in one message, the first configuration information may be identified, described, or indicated to specify a use of the first configuration information. For example, if it is explicitly specified that the first configuration information is used to configure a random access resource for cell change, it may be implicitly learned that the second configuration information is used to configure a random access resource for a beam failure recovery request. Alternatively, if it is explicitly specified that the second configuration information is used to configure a random access resource for a beam failure recovery request, it may be implicitly learned that the first configuration information is used to configure a random access resource for cell change. Alternatively, both a use of the first configuration information and a use of the second configuration information are explicitly specified. A manner of specifying the use of the first configuration information and the use of the second configuration information is not limited in this embodiment of this application, provided that the terminal can learn of the use of the configured random access resource. It may be understood that information indicating a random access resource may be transmitted by using a specific message or specific signaling. In this case, a use of the configured random access resource can be learned of without requiring any identifier. For example, the configuration information is sent by using a PDCCH order. If it is determined, through detection, that a PDCCH order is received, it may be learned that the random access resource indicated by the configuration information is a random access resource used to obtain an uplink TA. It may be understood that the use of the configuration information is specified, so that the terminal can learn of the use of the configured random access resource, to correctly handle the random access resource.

Optionally, beam identifiers corresponding to the random access resources may be further indicated in the configuration information, and the beam identifier may include a synchronization signal block index (SSB index) or a channel state information-reference signal index CSI-RS ID. Specifically, whether a beam is identified by using an SSB index or a CSI-RS ID may be configured by the network device or pre-defined. In a possible manner, the beam identifier may be associated with a time-frequency domain resource. The association with the time-frequency domain resource may be an association with a time-domain resource in the time-frequency domain resource, an association with a frequency-domain resource in the time-frequency domain resource, or an association with the time-frequency domain resource. In a possible manner, the beam identifier may be associated with a code resource. In a possible manner, the beam identifier may be associated with both a code resource and a time-frequency domain resource.

A possible manner of indicating the beam identifiers corresponding to the random access resources may be as follows: The configuration information includes beam identifiers corresponding to some or all of the random access resources. For example, a preamble is used as an example. It is assumed that three preambles are configured for random access, which are a first preamble, a second preamble, and a third preamble. The first preamble, the second preamble, and the third preamble may respectively correspond to an SSB index 1, an SSB index 2, and an SSB index 3. In this case, an association shown in Table 1 may be carried in the configuration information.

**Table 1**

| Random access resource | Beam identifier |
|---|---|
| First preamble | SSB index 1 |
| Second preamble | SSB index 2 |
| Third preamble | SSB index 3 |

Another possible manner of indicating the beam identifiers corresponding to the random access resources may be as follows: The configuration information includes an association between identifiers of random access resources and beam identifiers. For example, that the random access resource is a preamble is used as an example. It is assumed that three preambles are configured for random access, and indexes (or identifiers) of the preambles are a preamble 1, a preamble 2, and a preamble 3. The preamble 1, the preamble 2, and the preamble 3 may respectively correspond to an SSB index 1, an SSB index 2, and an SSB index 3. In this case, an association shown in Table 2 may be carried in the configuration information.

**Table 2**

| Identifier of a random access resource | Beam identifier |
|---|---|
| Preamble 1 | SSB index 1 |
| Preamble 2 | SSB index 2 |
| Preamble 3 | SSB index 3 |

It may be understood that when the random access resource is a time-frequency domain resource, an indication manner is similar to that in Table 1, and the association may be an association between identifiers of time-domain resources in the time-frequency domain resources and the beam identifiers, an association between identifiers of frequency-domain resources in the time-frequency domain resources and the beam identifiers, or an association between identifiers of the time-frequency domain resources and the beam identifiers.

S202. The terminal performs random access based on the configuration information.

When determining that random access needs to be initiated, the terminal may determine, based on content of the configuration information, a specific resource on which random access is performed.

As described above, for example, in the cell change scenario, the beam failure recovery scenario, or the scenario in which the terminal needs to obtain the uplink timing advance, the terminal may determine to initiate contention-based random access or contention-free random access.

In a possible manner, if a cell change is triggered by a handover (an inter-base station handover or an intra-base station handover), after the terminal receives an RRC reconfiguration message carrying mobility control information (mobilitycontrolinfo) or an RRC message used for reconfiguration with synchronization, the terminal may determine to initiate random access. In this case, the terminal performs random access based on the configuration information and a base station to which a changed-to cell belongs, to complete the cell change. For example, it is assumed that an inter-base station handover has occurred, the terminal and a target base station perform random access, and the configuration information carries three preamble indexes: a preamble 1, a preamble 2, and a preamble 3 that are used for contention-free random access, where each preamble index is associated with one SSB index. It is assumed that the preamble 1 is associated with an SSB index 1, the preamble 2 is associated with an SSB index 2, and the preamble 3 is associated with an SSB index 3. The terminal may determine an SSB (for example, an SSB identified by using the SSB index 2) based on signal quality or another parameter, and perform random access by sending a sequence identified by using the preamble 2 associated with the SSB index 2. If a beam identifier associated with a time-domain resource, a frequency-domain resource, or a time-frequency domain resource is indicated in the configuration information, the sequence identified by using the preamble 2 may be sent on a time-domain resource, a frequency-domain resource, or a time-frequency domain resource associated with the SSB index 2. If no beam identifier associated with a time-domain resource, a frequency-domain resource, or a time-frequency domain resource is indicated in the configuration information, the sequence identified by using the preamble 2 may be sent on a time-frequency domain resource included in the configuration information. Alternatively, for example, it is assumed that an inter-base station handover has occurred, the terminal and a target base station perform random access, and the configuration information carries three preamble indexes: a preamble 1, a preamble 2, and a preamble 3 that are used for contention-free random access, where each preamble index is associated with one CSI-RS ID (the preamble 1 is associated with a CSI-RS ID 1, the preamble 2 is associated with a CSI-RS ID 2, and the preamble 3 is associated with a CSI-RS ID 3). The terminal may determine a CSI-RS (for example, a CSI-RS identified by using the CSI-RS ID 1) based on signal quality or another parameter, and perform random access by sending a sequence identified by using the preamble 1 associated with the CSI-RS ID 1. It may be understood that which time-frequency domain resource is specifically used to send the sequence identified by using the preamble 1 is similar to that in the foregoing description. No more details are described herein. Alternatively, it is assumed that an inter-base station handover has occurred, the terminal and a target base station perform random access, and the configuration information carries three preamble indexes: a preamble 1, a preamble 2, and a preamble 3 that are used for contention-free random access, where each preamble index is associated with one SSB ID or CSI-RS ID (for example, the preamble 1 is associated with a CSI-RS ID 1, the preamble 2 is associated with an SSB index 1, and the preamble 3 is associated with a CSI-RS ID 2). The terminal may determine a reference signal (for example, a CSI-RS identified by using the CSI-RS ID 2) based on signal quality or another parameter, and perform random access by sending a sequence identified by using the preamble 3 associated with the CSI-RS ID 2. It may be understood that which time-frequency domain resource is specifically used to send the sequence identified by using the preamble 3 is similar to that in the foregoing description. No more details are described herein. A rule for determining a reference signal or a synchronization signal block by the terminal is not limited in this embodiment of this application. For example, a reference signal or a synchronization signal block with optimal signal quality may be selected. It may be understood that in the foregoing description, that the random access resource indicated in the configuration information is a preamble is used as an example for description. When the indicated random access resource is another type of resource, an implementation is similar. A difference is as follows: When a time-domain resource and a beam identifier corresponding to the time-domain resource are indicated, after the terminal determines the time-domain resource, the terminal may further obtain a time-frequency domain resource for random access based on an indicated frequency-domain resource. When a frequency-domain resource and a beam identifier corresponding to the frequency-domain resource are indicated, after the terminal determines the frequency-domain resource, the terminal may further obtain a time-frequency domain resource for random access based on an indicated time-domain resource. The target base station is a base station to which a target cell belongs. The random access between the terminal and the base station (the target base station or the base station to which the target cell belongs) may include the foregoing contention-free random access process or contention-based random access process.

It may be understood that the signal quality described in this embodiment of this application is a parameter used to specify quality of a signal, for example, may be a reference signal received power (reference signal received power, RSRP) or reference signal received quality (Reference Signal Received Quality, RSRQ).

In a possible manner, if the cell change is triggered by a change of a secondary cell group in dual connectivity, the terminal may determine, according to an indication from the network device, to initiate random access. Optionally, the indication information may be carried in a same message as the configuration information. In this scenario, a manner in which the terminal determines a random access resource based on the configuration information is similar to a manner of determining a random access resource when a cell change is triggered by a handover. No more details are described herein. After determining the random access resource based on the configuration information, the terminal performs random access with a target cell. The target cell herein may be a cell served by a secondary base station or another base station. The random access of the terminal to the target cell may include the foregoing contention-free random access process or contention-based random access process.

In a possible manner, when determining that a beam failure has occurred, and beam failure recovery needs to be performed, the terminal determines to initiate random access. For details about how to determine that a beam failure has occurred, refer to the foregoing description. No more details are described herein. In this case, the terminal performs random access with a serving base station based on the second configuration information, to implement beam failure recovery. For example, the second configuration information indicates three preamble indexes: a preamble 1, a preamble 2, and a preamble 3 that are used for contention-free random access, and each preamble index is associated with one SSB index (it is assumed that the preamble 1 is associated with an SSB index 1, the preamble 2 is associated with an SSB index 2, and the preamble 3 is associated with an SSB index 3). The terminal may determine an SSB (for example, an SSB identified by using the SSB index 2) based on signal quality or another parameter, and perform random access by sending a sequence identified by using the preamble 2 associated with the SSB index 2. It may be understood that which time-frequency domain resource is specifically used to send the sequence identified by using the preamble 2 is similar to that in the foregoing description. No more details are described herein. When a preamble index is associated with a CSI-RS ID, or when some preamble indexes are associated with SSB indexes, and some preamble indexes are associated with CSI-RS IDs, a manner in which the terminal determines a random access resource is similar to that in the foregoing description. No more details are described herein. The random access between the terminal and a the serving base station may include the foregoing contention-free random access process or contention-based random access process.

In a possible manner, after receiving the PDCCH order, the terminal may determine to initiate random access. In this case, the terminal performs random access with a serving base station based on the configuration information, to obtain the uplink TA. For example, the PDCCH order indicates three preamble indexes: a preamble 1, a preamble 2, and a preamble 3 that are used for contention-free random access, and each preamble index is associated with one SSB index (it is assumed that the preamble 1 is associated with an SSB index 1, the preamble 2 is associated with an SSB index 2, and the preamble 3 is associated with an SSB index 3). The terminal may determine an SSB (for example, an SSB identified by using the SSB index 2) based on signal quality or another parameter, and perform random access by sending a sequence identified by using the preamble 2 associated with the SSB index 2. It may be understood that which time-frequency domain resource is specifically used to send the sequence identified by using the preamble 2 is similar to that in the foregoing description. No more details are described herein. When a preamble index is associated with a CSI-RS ID, or when some preamble indexes are associated with SSB indexes, and some preamble indexes are associated with CSI-RS IDs, a manner in which the terminal determines a random access resource is similar to that in the foregoing description. No more details are described herein. The random access between the terminal and the serving base station may include the foregoing contention-free random access process or contention-based random access process.

S203. After the random access is completed, the terminal handles a random access resource configured by the network device.

That the random access is completed may include: the random access is successful (which may also be referred to as a random access success) and the random access is unsuccessful (which may also be referred to as a random access failure).

Optionally, for contention-free random access, when receiving a response to the access request, the terminal determines that the random access is successful (Random Access procedure successfully completed). If the access request (random access preamble) has been sent for a preset quantity of times, and no corresponding response is received, the terminal determines that the random access is unsuccessful (Random Access procedure unsuccessfully completed). The response may be a random access response, an uplink grant (for example, a CRC (Cyclic Redundancy check, cyclic redundancy check) of a C-RNTI-scrambled uplink grant), or a downlink assignment (for example, a CRC (Cyclic Redundancy check, cyclic redundancy check) of a C-RNTI-scrambled downlink assignment). For contention-based random access, the terminal may determine, after contention resolution (that is, after a contention resolution message sent by the base station is received), that the random access is successful. If the access request (a random access preamble) has been sent for a preset quantity of times, and no contention resolution message is received, or no corresponding random access response is received within a preset time, the terminal determines that the random access is unsuccessful. That the random access is completed includes: the random access is successful and/or the random access is unsuccessful.

After the random access is completed, contention-free random access resource with different uses may be handled in different manners.

For example, if the random access is triggered by a beam failure, and the random access is completed (including that the random access is successful and the random access is unsuccessful), the first resource is retained and not released. For example, the information
indicating the first resource is stored in the terminal, so that when a beam failure occurs later, the terminal can continue to perform beam failure recovery using the indicated first resource, and with no need to be notified by dedicated signaling, for example, RRC reconfiguration. Therefore, a beam failure recovery latency and signaling overheads can be reduced. It may be understood that because the terminal retains the information indicating the first resource, the terminal may learn of a specific dedicated resource that is retained. Before being released, the dedicated resource is not assigned to another terminal for use.

For example, information indicating first resources that is in the configuration information includes three preamble indexes: a preamble 1, a preamble 2, and a preamble 3 that are used for contention-free random access, and each preamble index is associated with one SSB ID or CSI-RS ID (for example, the preamble 1 is associated with a CSI-RS ID 1, the preamble 2 is associated with an SSB index 1, and the preamble 3 is associated with a CSI-RS ID 2). The terminal may determine a reference signal (for example, a CSI-RS identified by using the CSI-RS ID 2) based on signal quality or another parameter, and perform random access by sending a sequence identified by using the preamble 3 associated with the CSI-RS ID 2. After the random access succeeds, the preamble 1, the preamble 2, and the preamble 3 are not discarded. In other words, sequences indicated by the preamble 1, the preamble 2, and the preamble 3 continue to be retained for the terminal for use.

After the random access triggered by the cell change is completed, some or all of second resources are released. Optionally, when the second resources are handled, another resource (for example, the first resource) may be handled or may not be handled. This is not limited in this embodiment of this application. After the random access triggered by obtaining the uplink TA is completed, some or all of third resources may be released. Optionally, when the third resources are handled, another resource (for example, the first resource) may be handled or may not be handled. This is not limited in this embodiment of this application. The release of some or all of the second resources and the third resources may enable the released resources to be re-assigned, thereby improving resource utilization. The release of the resource (which may also be referred to as resource release) means that the terminal discards information indicating a corresponding resource. That the information indicating the resource is discarded means that the terminal cannot use the corresponding resource until the corresponding resource is re-assigned to the terminal.

For example, information indicating second resources that is in the configuration information includes three preamble indexes: a preamble 1, a preamble 2, and a preamble 3 that are used for contention-free random access, and each preamble index is associated with one SSB ID or CSI-RS ID (for example, the preamble 1 is associated with a CSI-RS ID 1, the preamble 2 is associated with an SSB index 1, and the preamble 3 is associated with a CSI-RS ID 2). The terminal may determine a reference signal (for example, a CSI-RS identified by using the CSI-RS ID 2) based on signal quality or another parameter, and perform random access by sending a sequence identified by using the preamble 3 associated with the CSI-RS ID 2. After the random access succeeds, the preamble 1, the preamble 2, and the preamble 3 are discarded, and sequences indicated by the preamble 1, the preamble 2, and the preamble 3 are released.

For example, information indicating third resources that is in the configuration information includes three preamble indexes: a preamble 1, a preamble 2, and a preamble 3 that are used for contention-free random access, and each preamble index is associated with one SSB ID or CSI-RS ID (for example, the preamble 1 is associated with a CSI-RS ID 1, the preamble 2 is associated with an SSB index 1, and the preamble 3 is associated with a CSI-RS ID 2). The terminal may determine a reference signal (for example, a CSI-RS identified by using the CSI-RS ID 2) based on signal quality or another parameter, and perform random access by sending a sequence identified by using the preamble 3 associated with the CSI-RS ID 2. After the random access succeeds, the preamble 1, the preamble 2, and the preamble 3 are discarded, and sequences indicated by the preamble 1, the preamble 2, and the preamble 3 are released.

Optionally, if the random access is triggered by a beam failure, and the random access is unsuccessful, some or all of the first resources may be released (or referred to as discarded). It may be understood that as described above, the first resource may be alternatively retained in this case. Alternatively, the configuration information or another message may further carry a time length of a timer. After the timer expires, the terminal releases some or all of the first resources. The timer may be started after the configuration information is received or after it is determined that a beam failure has occurred. It may be understood that the timer may be alternatively started on another occasion. This is not limited in this embodiment of this application. Alternatively, after receiving, from the network side, a notification of releasing the random access resource, if the notification includes information instructing to release the first resource, the terminal may release some or all of the first resources. The notification may be an RRC reconfiguration message. Optionally, the notification may include information used to indicate a specific resource to be released. In a possible manner, if the random access is performed due to the cell change, a base station to which a target cell belongs may send the notification to the terminal. In a possible manner, if the random access is performed due to the beam failure recovery or because the uplink TA needs to be obtained, a serving base station may send the notification to the terminal. Optionally, after the random access triggered by the cell change fails, some or all of the second resources may be released. After the random access triggered by obtaining the uplink TA fails, some or all of the third resources may be released. Alternatively, the second resource or the third resource may be released based on a corresponding timer, corresponding indication information, or another requirement.

In addition, in a possible manner, whether the random access is successful or the random access is unsuccessful, the contention-based random access resource may be retained. It may be understood that the contention-based random access resource may be alternatively released based on a corresponding timer, corresponding indication information, or another requirement. In addition, in a possible manner, if the terminal determines to perform medium access control (medium access control, MAC) reset (reset), the MAC reset includes: discarding all assigned contention-free random access resources, for example, discarding the first resource, discarding the second resource, and discarding the third resource. The MAC reset may further include at least one of the following operations: stopping all MAC timers, stopping an on-going random access process, clearing an Msg3 buffer, releasing a temporary C-RNTI, canceling a triggered scheduling request process, canceling a triggered buffer status reporting process, and canceling a triggered power headroom reporting process.

It may be understood that the method implemented by the terminal in the foregoing method embodiments may be alternatively implemented by a component (for example, an integrated circuit or a chip) that can be used for the terminal, and the method implemented by the network device (for example, a serving base station, a target base station, or a base station to which a target cell belongs) in the foregoing method embodiment may be alternatively implemented by a component (for example, an integrated circuit or a chip) that can be used for the network device.

Corresponding to the methods and steps implemented in the communication method provided in the foregoing method embodiment, the embodiments of this application further provide corresponding communications apparatuses, and the communications apparatuses include corresponding modules configured to execute the parts in the embodiment shown in FIG. 2. The module may be software, hardware, or a combination of software and hardware.

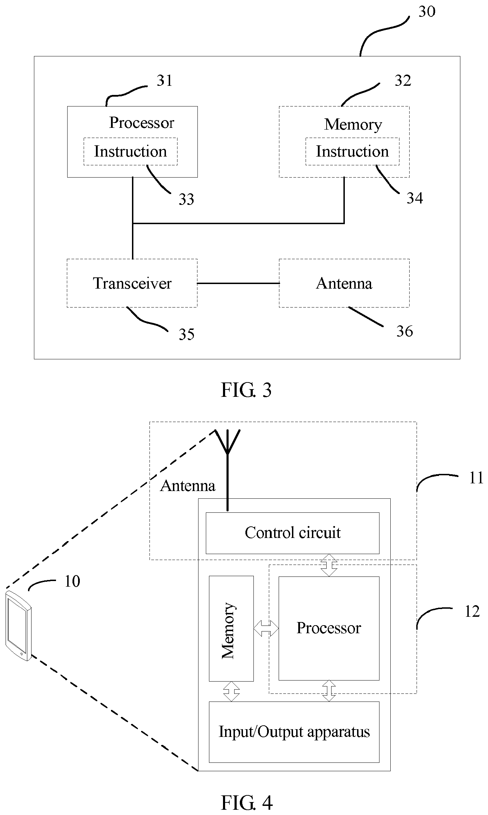

FIG. 3 is a schematic structural diagram of a communications apparatus. The communications apparatus 30 may be the network device 20 or the terminal 10 in FIG. 1. The communications apparatus may be configured to implement the corresponding method described in the foregoing method embodiment. For details, refer to a description in the foregoing method embodiment.

The communications apparatus 30 may include one or more processors 31. The processor 31 may also be referred to as a processing unit, and can implement a specific control function. The processor 31 may be a general-purpose processor, a dedicated processor, or the like. For example, the processor 31 may be a baseband processor or a central processing unit. The baseband processor may be configured to process a communication protocol and communication data. The central processing unit may be configured to: control the communications apparatus (for example, a base station, a baseband chip, a DU, or a CU), execute a software program, and process data of the software program.

In an optional design, the processor 31 may also store an instruction 33, and the instruction may be run by the processor, so that the communications apparatus 30 performs the method, described in the foregoing method embodiment, corresponding to the terminal or the network device.

In another possible design, the communications apparatus 30 may include a circuit. The circuit may implement a sending, receiving, or communication function in the foregoing method embodiment.

Optionally, the communications apparatus 30 may include one or more memories 32. The memory 32 stores an instruction 34 or intermediate data. The instruction 34 may run on the processor, so that the communications apparatus 30 performs the method described in the foregoing method embodiment. Optionally, the memory may further store other related data. Optionally, the processor may also store an instruction and/or data. The processor and the memory may be disposed separately, or may be integrated together.

Optionally, the communications apparatus 30 may further include a transceiver 35 and/or an antenna 36. The processor 31 may be referred to as a processing unit. The transceiver 35 may be referred to as a transceiver unit, a transceiver device, a transceiver circuit, or a transceiver, and is configured to implement a sending/receiving function of the communications apparatus.

In a design, a communications apparatus (for example, an integrated circuit, a wireless device, a circuit module, a network device, or a terminal) may include a processor and a transceiver. If the communications apparatus is configured to implement the operations corresponding to the terminal in the embodiment shown in FIG. 2, for example, the transceiver may receive the configuration information, the processor determines to initiate random access, the transceiver completes operations related to information sending/receiving in a random access process, and the processor completes operations related to processing or control in the random access process. Further, after the random access is completed, the processor handles a contention-free random access resource or a contention-based random access resource. For a specific processing manner, refer to the related description in the foregoing embodiment. If the communications apparatus is configured to implement the operations corresponding to the network device in FIG. 2, for example, the transceiver may send the configuration information, the transceiver completes operations related to information sending/receiving in a random access process, and the processor completes operations related to processing or control in the random access process. The transceiver may be further configured to notify the terminal of a specific random access resource to be released.

The processor and the transceiver described in this application may be implemented on an integrated circuit (integrated circuit, IC), an analog IC, a radio frequency integrated circuit RFIC, a mixed signal IC, an application-specific integrated circuit (application specific integrated circuit, ASIC), a printed circuit board (printed circuit board, PCB), an electronic device, or the like. The processor and the transceiver may also be manufactured by using various IC processing technologies, such as a complementary metal-oxide-semiconductor (complementary metal oxide semiconductor, CMOS), a negative channel metal-oxide-semiconductor (nMetal-oxide-semiconductor, NMOS), a positive channel metal-oxide-semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

In the descriptions of the foregoing embodiment, the communications apparatus is described by using the network device 20 or the terminal 10 as an example. However, a scope of the communications apparatus described in this application is not limited to the network device, and a structure of the communications apparatus may not be limited by FIG. 3. The communications apparatus may be an independent device or may be a part of a relatively large device. For example, the device may be:
(1) an independent integrated circuit IC, chip, chip system, or chip subsystem;
(2) a set having one or more ICs, where optionally, the IC set may also include a storage component configured to store data and/or an instruction;
(3) an ASIC, for example, a modem (MSM);
(4) a module that can be built in another device;
(5) a receiver, a terminal, a cellular phone, a wireless device, a handset, a mobile unit, a network device, or the like; or
(6) other devices.

FIG. 4 is a schematic structural diagram of a terminal. The terminal is applicable to the system shown in FIG. 1. For ease of description, FIG. 4 shows only main components of the terminal. As shown in FIG. 4, the terminal 10 includes a processor, a memory, a control circuit, an antenna, and an input/output apparatus. The processor is mainly configured to: process a communication protocol and communication data, control the entire terminal, execute a software program, and process data of the software program. The memory is mainly configured to store the software program and the data. The radio frequency circuit is mainly configured to: perform conversion between baseband signals and radio frequency signals, and process radio frequency signals. The antenna is mainly configured to transmit/receive a radio frequency signal in an electromagnetic wave form. The input/output apparatus such as a touchscreen, a display, or a keyboard is mainly configured to: receive data entered by a user, and output data to the user.

After user equipment is powered on, the processor may read the software program in a storage unit, explain and execute an instruction of the software program, and process the data of the software program. When the processor needs to send data through the antenna, after performing baseband processing on the to-be-sent data, the processor outputs a baseband signal to the radio frequency circuit. After performing radio frequency processing on the baseband signal, the radio frequency circuit sends a resulting radio frequency signal in an electromagnetic wave form by using the antenna. When there is data sent to the user equipment, the radio frequency circuit receives a radio frequency signal by using the antenna, converts the radio frequency signal into a baseband signal, and outputs the baseband signal to the processor. The processor converts the baseband signal into data and processes the data.

A person skilled in the art may understand that for ease of description, FIG. 4 shows only one memory and only one processor. Actually, the terminal may have a plurality of processors and a plurality of memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to: control the entire user equipment, execute the software program, and process the data of the software program. The processor in FIG. 4 integrates functions of the baseband processor and the central processing unit. A person skilled in the art may understand that the baseband processor and the central processing unit may be alternatively separate processors that are interconnected by using a technique such as a bus. A person skilled in the art may understand that the terminal may include a plurality of baseband processors to adapt to different network standards, and the terminal may include a plurality of central processing units to enhance a processing capability of the terminal. The components in the terminal may be connected by using various buses. The baseband processor may also be expressed as a baseband processing circuit or a baseband processing chip. The central processing unit may also be expressed as a central processing circuit or a central processing chip. A function of processing the communication protocol and the communication data may be embedded into the processor, or may be stored in the storage unit in a form of a software program. The processor executes the software program to implement a baseband processing function.

In an example, the antenna and the control circuit that have a sending/receiving function may be considered as a transceiver unit 11 of the terminal 10, and the processor having a processing function may be considered as a processing unit 12 of the terminal 10. As shown in FIG. 4, the terminal 10 includes the transceiver unit 11 and the processing unit 12. The transceiver unit may also be referred to as a transceiver device, a transceiver, a transceiver apparatus, or the like. Optionally, a component that is in the transceiver unit 11 and configured to implement a receiving function is considered as a receiving unit, and a component that is in the transceiver unit 11 and configured to implement a sending function is considered as a sending unit. In other words, the transceiver unit 11 includes the receiving unit and the sending unit. For example, the receiving unit may also be referred to as a receiver device, a receiver, a receiver circuit, or the like, and the sending unit may also be referred to as a transmitter device, a transmitter, a transmit circuit, or the like.

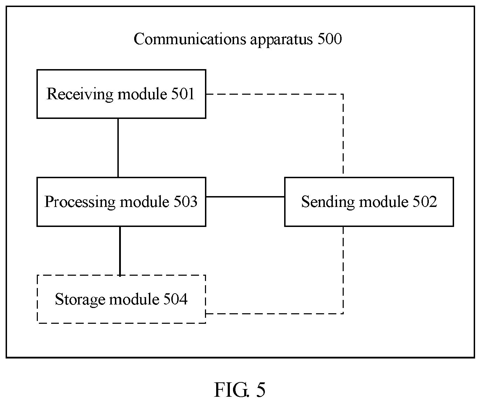

As shown in FIG. 5, another embodiment of this application provides a communications apparatus 500. The communications apparatus may be a terminal, a component (for example, an integrated circuit or a chip) of a terminal, or another communications module, and is configured to implement the operations corresponding to the terminal in the method embodiment shown in FIG. 2. The communications apparatus may include a receiving module 501, a sending module 502, and a processing module 503. Optionally, the communications apparatus may further include a storage module 504.

The receiving module 501 may be configured to receive configuration information, where the configuration information includes information used to indicate one or more contention-free random access resources, the contention-free random access resources include a first resource, and the first resource is a random access resource for a beam failure recovery request.

When random access needs to be initiated, the sending module 502 sends a random access request based on the configuration information received by the receiving module 501. Whether the random access needs to be initiated may be implemented by the processing module 503. For details about how to determine whether to initiate the random access, refer to a related description in the foregoing method embodiment.

Further, the processing module 503 is further configured to: when the random access is completed, handle the random access resource, including: retaining information indicating the first resource. In addition, for handling of a second resource and a third resource by the processing module 503, refer to a description in the foregoing method embodiment. The processing module 503 may be alternatively configured to handle the random access resource according to an indication from a network device or based on a timer after the random access fails. The receiving module 501 may be configured to receive, from the network device, an indication of releasing the random access resource.

Optionally, if the processing module 503 determines that contention-free random access is initiated, the receiving module 501 may be further configured to receive a random access response sent by a base station. If the processing module determines that contention-based random access is initiated, the receiving module 501 may be further configured to: receive a random access response sent by a base station, and receive a contention resolution message sent by the base station, and the sending module 502 may be further configured to send a message 3.

Optionally, the storage module 504 may be configured to store an instruction, intermediate data (or information), or other related data (or information). In a possible manner, the storage module 504 may be coupled to the processing module 503, and the processing module invokes the instruction or the data in the storage module.

It may be understood that modules in the communications apparatus 500 may be disposed separately, or may be integrated together. The foregoing modules may also be referred to as components or circuits. For example, the receiving module may be referred to as a receiving circuit or a receiving component.

It may be understood that the communications apparatus 500 may be implemented by using at least one processor, may be implemented by using at least one processor and at least one memory, may be implemented by using at least one processor and at least one transceiver, or may be implemented by using at least one processor, at least one transceiver, and at least one memory. The processor, the transceiver, and the memory may be disposed separately, or may be integrated together.

It should be noted that for operations or implementations of the foregoing modules, refer to the related description in the method embodiment.

A person skilled in the art may further understand that various illustrative logical blocks (illustrative logical block) and steps (step) that are listed in the embodiments of this application may be implemented by using electronic hardware, software, or a combination thereof. Whether the functions are implemented by using hardware or software depends on particular applications and a design requirement of the entire system. A person skilled in the art may use various methods to implement the described functions for each particular application. The technologies described in this application may be implemented in various manners. For example, these technologies may be implemented by using hardware, software, or a combination of software and hardware. For a hardware implementation, a processing unit configured to execute these technologies on a communications apparatus (for example, a base station, a terminal, a network entity, or a chip) may be implemented by using one or more general-purpose processors, a digital signal processor (DSP), a digital signal processing device (DSPD), an application-specific integrated circuit (ASIC), a programmable logic device (PLD), a field programmable gate array (FPGA) or another programmable logic apparatus, a discrete gate or transistor logic, a discrete hardware component, or any combination thereof. The general-purpose processor may be a microprocessor. Optionally, the general-purpose processor may alternatively be any conventional processor, controller, microcontroller, or state machine. The processor may alternatively be implemented by a combination of computing apparatuses, for example, a digital signal processor and a microprocessor, a plurality of microprocessors, one or more microprocessors with a digital signal processor core, or any other similar configuration.

A person of ordinary skill in the art may understand that various reference numerals such as "first" and "second" in this specification are merely used for differentiation for ease of description, or represent a sequence. The term "and/or" describes an association for describing associated objects and represents that three relationships may exist. For example, A and/or B may represent the following three cases: Only A exists, both A and B exist, and only B exists. The character "/" generally indicates an "or" relationship between the associated objects.

The steps of the methods or algorithms described in the embodiments of this application may be directly embedded into hardware, an instruction executed by a processor, or a combination thereof. The memory may be a RAM memory, a flash memory, a ROM memory, an EPROM memory, an EEPROM memory, a register, a hard disk, a removable magnetic disk, a CD-ROM, or a storage medium of any other form in the art. For example, the memory may be connected to a processor, so that the processor can read information from the memory and write information to the memory. Optionally, the memory may be alternatively integrated into a processor. The processor and the memory may be arranged in an ASIC, and the ASIC may be arranged in a terminal. Optionally, the processor and the memory may be arranged in different components of the terminal.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer readable storage medium or may be transmitted from a computer readable storage medium to another computer readable storage medium. For example, the computer instructions may be transmitted from one website, computer, server, or data center to another website, computer, server, or data center in a wired (for example, through a coaxial cable, an optical fiber, or a digital subscriber line (DSL)) or wireless (for example, through infrared, radio, or microwave) manner. The computer readable storage medium may be any usable medium accessible to a computer, or a data packet storage device, such as a server or a data packet center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like. The foregoing combination should also be included in the protection scope of the computer-readable medium.

For identical or similar parts in the embodiments in this specification, mutual reference may be made between the embodiments.

## Claims

1. A communication method, comprising:
receiving (S201) configuration information, wherein the configuration information comprises information indicating first resources which comprise one or more contention-free random access resources, and the one or more contention-free random access resources comprise a contention-free random access resource for a beam failure recovery request; and the one or more contention-free random access resources further comprise a contention-free random access resource for a cell change;
sending (S202) a random access request based on the configuration information; and
when random access is completed, retaining (S203) the contention-free random access resource for a beam failure recovery request and releasing the contention-free random access resource for the cell change;
wherein
the configuration information further comprises beam identifiers corresponding to some or all of the contention-free random access resources, or
the configuration information further comprises an association between identifiers of random access resources and beam identifiers;
wherein the random access resources comprise a contention-based random access resource and the contention-free random access resources, and the beam identifiers are
a synchronization signal block index or a channel state information-reference signal index,
the retaining (S203) the contention-free random access resource for a beam failure recovery request comprises: retaining information indicating the contention-free access resource for a beam failure recovery request.

2. The method according to claim 1, wherein the one or more contention-free random access resources comprises at least one of a time-frequency domain resource and a code resource.

3. The method according to claim 2, wherein the code resource is a preamble.

4. The method according to any one of claims 1 to 3, wherein the configuration information further comprises information indicating a contention-based random access resource.

5. The method according to any one of claims 1 to 4, wherein the method further comprises: when a beam failure occurs, sending a random access request based on the configuration information; and when receiving a response corresponding to the random access request or receiving a contention resolution message, determining that the random access is successful.

6. A communications apparatus (500), **characterized in that** the apparatus is configured to implement the method according to any one of claims 1-5.

7. A computer readable storage medium, comprising an instruction, wherein when the instruction is run, causing an apparatus to perform the method according to any one of claims 1 to 5.

8. A communications system, comprising a network device and the communications apparatus according to claim 6.

9. A computer program product, wherein the product comprises an instruction, and when the instruction is run, a communications apparatus is enabled to implement the method according to any one of claims 1 to 5.

## Patentansprüche

1. Kommunikationsverfahren, das Folgendes umfasst:
Empfangen (S201) von Konfigurationsinformationen, wobei die Konfigurationsinformationen Informationen umfassen, die erste Ressourcen anzeigen, die eine oder mehrere konkurrenzfreie Direktzugriffsressourcen umfassen, und wobei die eine oder die mehreren konkurrenzfreien Direktzugriffsressourcen eine konkurrenzfreie Direktzugriffsressource für eine Strahlausfallwiederherstellungsanforderung umfassen; und die eine oder die mehreren konkurrenzfreien Direktzugriffsressourcen ferner eine konkurrenzfreie Direktzugriffsressource für einen Zellenwechsel umfassen;
Senden (S202) einer Direktzugriffsanforderung basierend auf den Konfigurationsinformationen; und
wenn der Direktzugriff abgeschlossen ist, Beibehalten (S203) der konkurrenzfreien Direktzugriffsressource für eine Strahlausfallwiederherstellungsanforderung und Freigeben der konkurrenzfreien Direktzugriffsressource für den Zellenwechsel; wobei
die Konfigurationsinformationen ferner Strahlbezeichner umfassen, die einigen oder allen der konkurrenzfreien Direktzugriffsressourcen entsprechen, oder die Konfigurationsinformationen ferner eine Zuordnung zwischen Bezeichnern von Direktzugriffsressourcen und Strahlbezeichnern umfassen;
wobei die Direktzugriffsressourcen eine konkurrenzbasierte Direktzugriffsressource und die konkurrenzfreie Direktzugriffsressourcen umfassen und die Strahlbezeichner ein Synchronisationssignalblockindex oder ein Kanalzustandsinformationsreferenzsignalindex sind,
das Beibehalten (S203) der konkurrenzfreien Direktzugriffsressource für eine Strahlausfallwiederherstellungsanforderung Folgendes umfasst: Beibehalten von Informationen, die die konkurrenzfreie Zugriffsressource für eine Strahlausfallwiederherstellungsanforderung anzeigen.

2. Verfahren nach Anspruch 1, wobei die eine oder die mehreren konkurrenzfreien Direktzugriffsressourcen eine Zeitfrequenzdomänenressource und/oder eine Coderessource umfassen.

3. Verfahren nach Anspruch 2, wobei die Coderessource eine Präambel ist.

4. Verfahren nach einem der Ansprüche 1 bis 3, wobei die Konfigurationsinformationen ferner Informationen umfassen, die eine konkurrenzbasierte Direktzugriffsressource anzeigen.

5. Verfahren nach einem der Ansprüche 1 bis 4, wobei das Verfahren ferner Folgendes umfasst: wenn ein Strahlausfall auftritt, Senden einer Direktzugriffsanforderung basierend auf den Konfigurationsinformationen; und wenn eine Antwort empfangen wird, die der Direktzugriffsanforderung entspricht, oder eine Konkurrenzlösungsnachricht empfangen wird, Bestimmen, dass der Direktzugriff erfolgreich ist.

6. Kommunikationseinrichtung (500), **dadurch gekennzeichnet, dass** die Einrichtung konfiguriert ist, das Verfahren nach einem der Ansprüche 1-5 zu implementieren.

7. Computerlesbares Speichermedium, das eine Anweisung umfasst, wobei, wenn die Anweisung ausgeführt wird, eine Einrichtung veranlasst wird, das Verfahren nach einem der Ansprüche 1 bis 5 durchzuführen.

8. Kommunikationssystem, das eine Netzwerkvorrichtung und die Kommunikationseinrichtung nach Anspruch 6 umfasst.

9. Computerprogrammprodukt, wobei das Produkt eine Anweisung umfasst und wenn die Anweisung ausgeführt wird, eine Kommunikationseinrichtung aktiviert wird, das Verfahren nach einem der Ansprüche 1 bis 5 zu implementieren.

## Revendications

1. Procédé de communication, comprenant :
la réception (S201) d'informations de configuration, les informations de configuration comprenant des informations indiquant des premières ressources qui comprennent une ou plusieurs ressources d'accès direct sans collision, et la ou les ressources d'accès direct sans collision comprenant une ressource d'accès direct sans collision pour une demande de reprise après défaillance de faisceau ; et la ou les ressources d'accès direct sans collision comprenant en outre une ressource d'accès direct sans collision pour un changement de cellule ;
l'envoi (S202) d'une demande d'accès direct sur la base des informations de configuration ; et
lorsque l'accès direct est terminé, la conservation (S203) de la ressource d'accès direct sans collision pour une demande de reprise après défaillance de faisceau et la libération de la ressource d'accès direct sans collision pour le changement de cellule ;
les informations de configuration comprenant en outre des identifiants de faisceau correspondant à certaines ou à toutes les ressources d'accès direct sans collision, ou
les informations de configuration comprenant en outre une association entre des identifiants de ressources d'accès direct et des identifiants de faisceau ;
les ressources d'accès direct comprenant une ressource d'accès direct basée sur une collision et les ressources d'accès direct sans collision, et les identifiants de faisceau étant un index de bloc de signal de synchronisation ou un index de signal de référence d'informations d'état de canal,
la conservation (S203) de la ressource d'accès direct sans collision pour une demande de reprise après défaillance de faisceau comprenant : la conservation d'informations indiquant la ressource d'accès sans collision pour une demande de reprise après défaillance de faisceau.

2. Procédé selon la revendication 1, dans lequel la ou les ressources d'accès direct sans collision comprennent une ressource de domaine temps-fréquence et/ou une ressource de code.

3. Procédé selon la revendication 2, dans lequel la ressource de code est un préambule.

4. Procédé selon l'une quelconque des revendications 1 à 3, dans lequel les informations de configuration comprennent en outre des informations indiquant une ressource d'accès direct sans collision.

5. Procédé selon l'une quelconque des revendications 1 à 4, dans lequel le procédé comprend en outre : lorsqu'une défaillance de faisceau se produit, l'envoi d'une demande d'accès direct sur la base des informations de configuration ; et lors de la réception d'une réponse correspondant à la demande d'accès direct ou de la réception d'un message de résolution de collision, la détermination selon laquelle l'accès direct réussit.

6. Appareil de communication (500), **caractérisé en ce que** l'appareil est configuré pour mettre en oeuvre le procédé selon l'une quelconque des revendications 1 à 5.

7. Support de stockage lisible par ordinateur, comprenant une instruction, dans lequel lorsque l'instruction est exécutée, elle amène un appareil à effectuer le procédé selon l'une quelconque des revendications 1 à 5.

8. Système de communication, comprenant un dispositif de réseau et l'appareil de communication selon la revendication 6.

9. Produit-programme informatique, dans lequel le produit comprend une instruction, et lorsque l'instruction est exécutée, un appareil de communication est activé pour mettre en oeuvre le procédé selon l'une quelconque des revendications 1 à 5.
